# EUROPÄISCHE PATENTSCHRIFT

(11) **EP 0 781 175 B1**
(45) Veröffentlichungstag und Bekanntmachung des Hinweises auf die Patenterteilung: **24.02.1999**
(21) Anmeldenummer: 95931145.7
(22) Anmeldetag: 08.09.1995
(51) Int. Cl.: B21B 39/12, B65G 13/11

(54) **ROLLGANG ZUM TRANSPORT VON LANGGESTRECKTEM, STABFÖRMIGEM GUT**
ROLLER TABLE FOR TRANSPORTING ELONGATED, BAR-SHAPED MATERIALS
TABLE A ROULEAUX POUR LE TRANSPORT DE MATERIAUX ALLONGES EN BARRE

(30) Priorität: 16.09.1994 DE 4434390
(43) Veröffentlichungstag der Anmeldung: 02.07.1997
(73) Patentinhaber: MANNESMANN Aktiengesellschaft, 40213 Düsseldorf (DE)
(72) Erfinder: PIETERS, Rolf, Dipl.-Ing., D-45473 Mülheim (DE); KLEMME, Wolfgang, Dipl.-Ing., D-47053 Duisburg (DE)
(74) Vertreter: Meissner, Peter E., Dipl.-Ing.
(86) Internationale Anmeldenummer: DE9501275
(87) Internationale Veröffentlichungsnummer: WO9608325

(56) Entgegenhaltungen:
- DD-A- 205 088
- DE-A- 1 602 097
- PATENT ABSTRACTS OF JAPAN vol. 4 no. 99 (M-021) ,16.Juli 1980 & JP,A,55 057317 (HITACHI) 28.April 1980,
- SOVIET INVENTIONS ILLUSTRATED Section Ch, Week 8435 10.Oktober 1984 Derwent Publications Ltd., London, GB; Class M21, AN 84-218466 & SU,A,1 066 687 (KOMM METALLURGY WKS) , 15.Januar 1984
- PATENT ABSTRACTS OF JAPAN vol. 4 no. 99 (M-021) ,16.Juli 1980 & JP,A,55 057316 (HITACHI) 28.April 1980,

## Beschreibung

Die Erfindung betrifft einen Rollgang zum Transport von langgestrecktem stabförmigem Gut, insbesondere Hohlprofile beliebigen Querschnittes gemäß dem Gattungsbegriff des Hauptanspruches.

In Profilwalzwerken beispielsweise für Stabmaterial oder in Rohrwalzwerken muß das langgestreckte stabförmige Gut zu und von den Umformaggregaten ebenso in den Adjustagelinien zu und von den Schneid- und Bearbeitungsmaschinen sowie Prüfstationen transportiert werden. Dies geschieht in vielen Fällen mittels Rollgänge, die mit meist zylindrisch ausgebildeten Transportrollen versehen sind, die wiederum etwa gleiche Abstände zueinander aufweisen. Die Transportrollen können über Motoren einzeln oder mittels durchlaufender Ketten gruppenweise angetrieben sein oder nur als lose Rollen fungieren, wobei die Vortriebskraft für das Gut vom jeweiligen Umformaggregat erzeugt wird.

Der Abstand zwischen zwei benachbart liegenden Transportrollen ist ein Kompromiß zwischen Aufwand für die Installation des Rollganges und der gewünschten Laufruhe des Transportgutes. Bei etwas größeren Abständen kann es vorkommen, daß das zu transportierende Gut vor dem Auflaufen auf die nächste Transportrolle etwas durchhängt und dann ein Anlaufstoß erzeugt wird, um das Gut auf die Oberkante der Transportrolle anzuheben. Dieser Anlaufstoß verursacht Lärm und bringt Unruhe in die Transportbewegung. Das letztgenannte ist dann unerwünscht, wenn das Gut beispielsweise einer Prüfeinrichtung zugeführt werden soll und der vor der Prüfeinrichtung angeordnete Einlauftrichter möglichst mittig angesteuert werden soll. Das Durchhängen zwischen zwei benachbart liegenden Transportrollen wird verursacht durch das Eigengewicht in Relation zur Steifigkeit des Gutes und durch Abweichung in der Geradheit, wie es insbesondere bei Walzgut häufig anzutreffen ist. Insbesondere Walzgut mit kleinem Durchmesser bzw. kleinem Umfang und großer Wanddicke neigt im starken Maße zum Durchhängen infolge des ungünstigen Verhältnisses zwischen Eigengewicht und Trägheitsmoment des betrachteten Querschnittes.

In der DE-OS 1602097 ist ein gattungsbestimmender Rollgang offenbart, bei dem jeweils zwischen zwei aufeinanderfolgenden Transportrollen unterhalb der Bewegungsbahn eine Abdeckplatte angeordnet ist mit einer gesamten Breitenerstreckung, die nahezu derBreite der Transportrollen entspricht. Um einen ungestörten Transport auch bei Skibildung der Enden von Walzblechen sicherzustellen, ist die Abdeckplatte als eine nach oben geöffnete trogförmige Rinne ausgebildet, auf der in bestimmten Abständen in Walzrichtung sich erstreckende Stege angeordnet sind, die an der Rinne befestigt sind. Die Enden der Stege sind in Richtung auf die Achse der jeweils benachbarten Transportrolle geneigt.Diese Anordnung ist für den Transport von stabförmigen Gutnicht geeignet, da dieses zwischen den Stegen steckenbleiben kann. Außerdem ist der Abstand des Abdeckelementes zur Oberkante der Transportrolle nicht veränderbar, so daß der Anlaufstoß nicht eingestellt werden kann.

Die EP 0149694 A1 Zeigt eine Friktionsrollenbahn, bei der an einer durchgehenden Mittelführung ein zweiteiliges nach beiden Seiten sich erstreckendes Abdeckblech angeordnet ist. Diese Abdeckblech deckt zum einen das tragende Profil sowie die Reibradanordnung ab. Dadurch soll verhindert werden, daß Schmutz oder Öl in die Rollenbahn gelangen können.

Der DE-GM 8621016 ist eine Rollenbahn für Fahrseugkarosserie-Transportschlitten entnehmbar, bei der ein durchgehendes ebenes Abdeckblech vorgesehen ist mit kleinen fensterartigen Öffnungen für den Durchtrii der Tragrollen. Dieses Abdeckblech soll die Rollenbahn vor Verschmutzungen schützen.

Ferner sei auf die DD 205 088 hingewiesen, die einen Rollgang zum geräuscharmen Transport von Walzgut offenbart. Dabei ist zwischen den Rollgangsrollen eine elastisch gelagerte Auflaufvorrichtung angeordnet.

Aufgabe der Erfindung ist es, einen Rollgang der gattungsmäßigen Art anzugeben, der beim Transport von langgestrecktem stabförmigem Gut weniger Lärm verursacht und durch den mehr Laufruhe erzeugt wird.

Diese Aufgabe wird mit den im kennzeichnenden Teil des Anspruches 1 angegebenen Merkmalen gelöst. Vorteilhafte Weiterbildungen sind Bestandteil von Unteransprüchen.

Durch die erfindungsgemäße Anordnung eines schwenkbaren Leitbleches zwischen zwei aufeinanderfolgenden Transportrollen gleitet das zu transportierende Gut wie auf einer schiefen Ebene auf die folgende Transportrolle. Damit die Transportrolle die Funktion des Weitertransportes weiterhin erfüllen kann, liegt das vordere Ende des eingeschwenkten Leitbleches immer etwas unterhalb der Oberkante der Transportrolle. Da Transportrollen je nach Beanspruchung schneller oder langsamer verschleißen und dadurch im Durchmesser geringer werden, kann in einfacher Weise durch die Höhenverstellung des vorderen Endes des Leitbleches die notwendige Anpassung vorgenommen werden. Die Verstellung ist stufenlos und kann in jeder beliebigen Stellung fixiert werden. Vorzugsweise beträgt der Abstand zwischen Oberkante des vorderen Ende des Leitbleches zur Oberkante der Transportrolle etwa 1 mm. Dies ist ein Wert, der groß genug ist, damit die Transportrolle weiterhin ihre Funktion übernehmen kann und klein genug, um einen Anlaufstoß des Transportgutes zu vermeiden.

Das Leitblech läßt sich ohne weiteres nachträglich in einen bestehenden Rollgang einbauen, da der Schwenkgrad des Leitbleches unabhängig vom Rollgang einstellbar ist und kein Stellmotor oder dergleichen benötigt wird.

In der Zeichnung wird anhand eines Ausführungsbeispieles der erfindungsgemäße Rollgang näher erläutert.

Es zeigen:
- Figur 1: einen Längsschnitt durch einen erfindungsgemäßen Rollgang im Bereich zweier Transportrollen
- Figur 2: in einem vergrößerten Maßstab einen Schnitt A-B in Fig. 1
- Figur 3: in einem vergrößerten Maßstab einen Schnitt C-D in Fig 1.

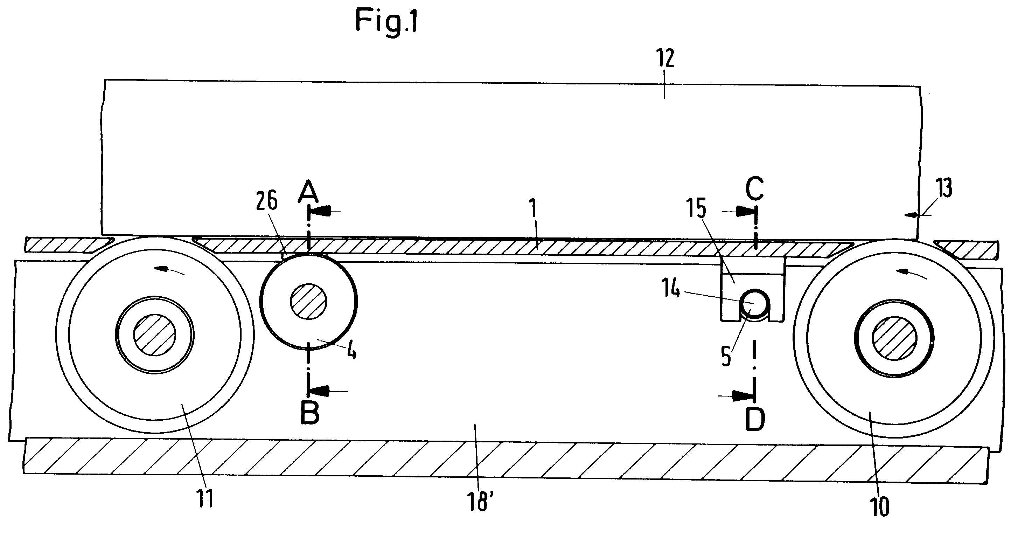

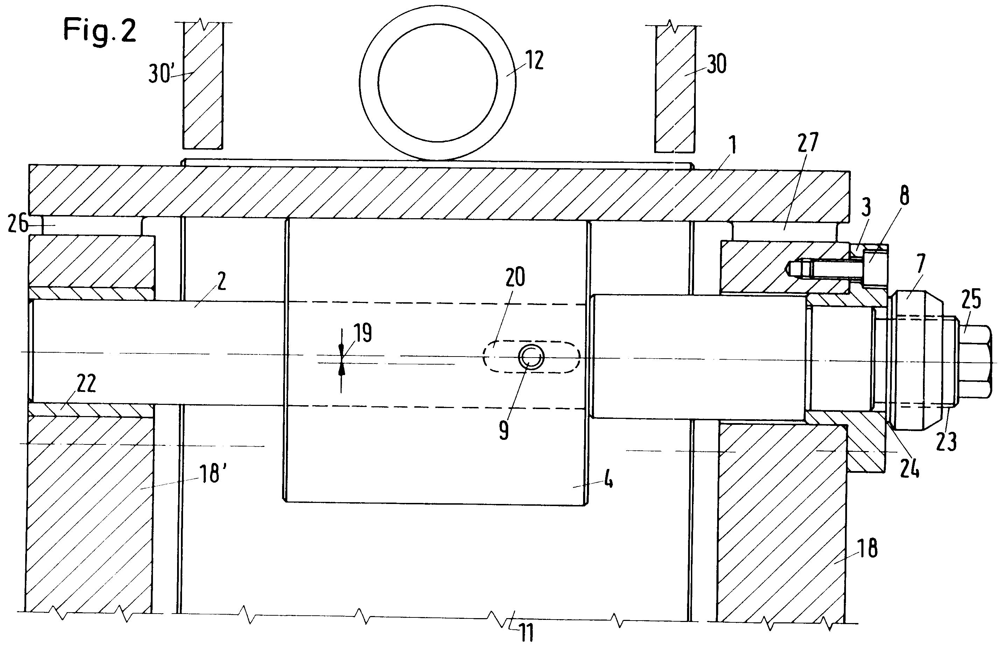

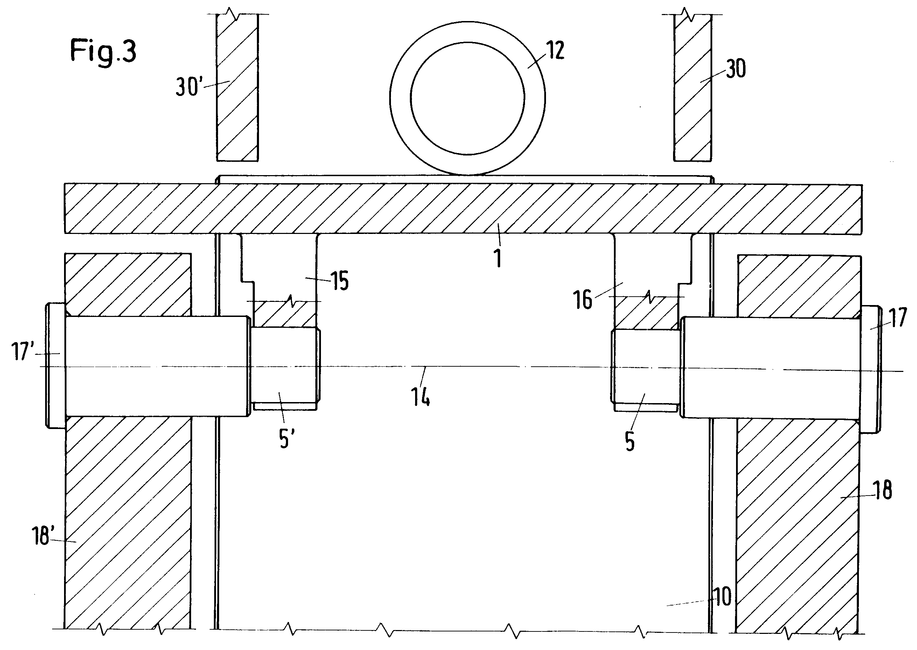

In Figur 1 ist in einem Längsschnitt im Bereich zweier Transportrollen 10,11 und in den Figuren 2 und 3 in einem vergrößerten Maßstab je ein Querschnitt in Fig. 1 ein erfindungsgemäßer Rollgang dargestellt. Auf diesem Rollgang soll ein langgestrecktes stabförmiges Gut, beispielsweise ein Rohr 12 transportiert werden. Die bereits bekannten Seitenbleche 30.30' zur Verhinderung des seitlichen Ausbrechens des Transportgutes 12 sind hier nur angedeutet.

In Figur 1 ist die Laufrichtung des Transportgutes 12 mit einem Pfeil 13 gekennzeichnet. Damit es beim Transport dieses Rohres 12 beim Auflaufen auf die nachfolgende Transportrolle 11 infolge Durchhängens nicht zu einem Anlaufstoß kommt, ist erfindungsgemäß zwischen zwei aufeinanderfolgenden Transportrollen 10,11 ein schwenkbares Leitblech 1 angeordnet. Die Schwenkachse 14 befindet sich in der Nähe der ersten Transportrolle 10, und zwar unterhalb der Transportebene, die gebildet wird durch die gemeinsame Tangente beider Transportrollen 10,11.

In Figur 3 sind in einem vergrößerten Maßstab die Einzelheiten des Schwenkbereiches dargestellt. Auf der Unterseite des Leitbleches 1 sind zwei Sattelstücke 15,16 angeschweißt, die sich auf einen Zapfen 5,5' je eines Bolzens 17,17' abstützen. Die Bolzen 17,17' sind in Bohrungen eines durchlaufenden Trägers 18,18' angeordnet.

Figur 2 zeigt in einem vergrößerten Maßstab im Querschnitt entlang der Linie A-B in Figur 1 die Möglichkeit der stufenlosen Einstellung des Schwenkgrades des Leitbleches 1. Dazu ist auf einer abgesetzten Welle 2 eine exzentrisch darauf gelagerte Rolle 4 angeordnet, die über einen Gewindestift 9 axial gesichert wird. Der Grad der Exzentrizität 19 ist durch Pfeile gekennzeichnet. Der linke Endbereich der Rolle 2 ist in einer Büchse 22 gelagert, die im links sich befindenden Träger 18'angeordnet ist. Diese Büchse 22 erlaubt es, daß die ßedienseite zur Einstellung des Schwenkgrades des Leitbleches 1 wahlweise rechts oder links sein kann. Der rechte Endbereich der Rolle 2 dreht sich in einem Flansch 3, der mit Schrauben 8 am rechts sich befindenden Träger 18 befestigt ist. Mit einem Absatz endet der rechte Endbereich in einen Gewindeabschnitt 23, auf den eine Feststellmutter 7 aufschraubbar ist. Die Feststellmutter 7 stützt sich über eine Unteriegscheibe 24 auf der Stirnseite des Flansches 3 ab. Zum Drehen der Welle 2 mittels eines Maul- oder Steckschlüssels ist der rechte Stirnbereich der Wette 2 mit einem Schraubenkopf 25 versehen.

Die Einstellung des gewünschten Schwenkgrades erfolgt nun in der Weise, daß zuerst die Feststellmutter 7 gelöst wird und mittels eines auf den Schraubenkopf 25 angesetzten Schlüssels die Welle 2 nach rechts oder links gedreht wird. Über die Paßfeder 20 wird dabei die exzentrisch gelagerte Rolle 4 mitgedreht. Die exzentrische Lagerung bewirkt, daß bei der Drehung der Rolle 4 das Leitblech 1 angehoben oder gesenkt wird. Ist der gewünschte Schwenkgrad bzw. der gewünschte Höhenabstand zur Oberkante der in Figur 1 links liegenden Transportrolle 11 eingestellt, dann wird die Feststellmutter 7 wieder angezogen und der eingestellte Schwenkgrad bleibt fixiert. Falls der vorgegebene Schwenkgrad wider Erwarten nicht den optimalen Effekt bringt, dann kann jederzeit die Schwenkeinstellung wie zuvor beschrieben wiederholt werden. Im Ausgangszustand, d. h. ohne Verstellung der exzentrisch gelagerten Rolle 4 liegt das Leitblech 1 waagerecht und bei dieser Ausführung etwa 3 mm tiefer als die Oberkante der Transportrolle 11. Dazu ist im Verstellbereich unterhalb des Leitbleches 1 je eine Anschlagplatte 26,27 angeschweißt, die im Ausgangszustand auf der oberen Schmalseite der Träger 18,18'zur Anlage kommen. Diese Anschlagplatten 26,27 dienen auch als Sicherung, damit beim Auswechsein der exzentrisch gelagerten Rolle 4 das vordere Ende des Leitbleches 1 nicht auf der Transportrolle 11 schleift.

Es versteht sich von selbst, daß man aus Kostengrunden nicht den gesamten Rollgang einer Adjustagelinie mit solchen Höhenleitblechen versehen wird. In erster Linie wird man die Abschnitte des Rollganges auswählen, wo ein geringer Lärmpegel gefordert wird oder wo zur Hinführung des Gutes beispielsweise auf eine Prüfeinrichtung eine besondere Laufruhe erforderlich ist.

## Patentansprüche

1. Rollgang zum Transport von langgestrecktem stabförmigem Gut, insbesondere Hohlprofile beliebigen Querschnittes mit etwa gleiche Abstände voneinander aufweisenden Transportrollen deren Drehach senkrecht zur Laufrichtung des Gutes liegen, wobei jeweils zwischen zwei aufeinanderfolgenden Transportrollen (10,11) unterhalb der Bewegungsbahn eine Abdeckplatte (1) angeordnet ist mit einer Mindestbreit, die der Breite der Transportrolle (10,11) enspricht,
dadurch gekennzeichnet.
daß die Abdeckplatte als schwenkbares Leitblech (1) ausgebildet ist, dessen Schwenkachse (14) im Bereich der in Laufrichtung (13) gesehen ersten Transportrolle (10) sich befindet und im eingeschwenkten Zustand das Leitblech (1) in Laufrichtung (13) gesehen einen Anstieg aufweist, wobei das vordere Ende des Leitbleches (1) etwas unterhalb der Oberkante der in Laufrichtung (13) gesehen zweiten Transportrolle (11) sich befindet und daß sich hochkant stehende durchgehende Seitenbleche (30,30') in den Endbereichen der jeweiligen Transportrolle (10,11) befinden.

2. Rollgang nach Anspruch 1,
dadurch gekennzeichnet.
daß die Schwenkbarkeit des Leitbleches (1) stufenlos ist.

3. Rollgang nach den Ansprüchen 1 und 2,
dadurch gekennzeichnet,
daß im Bereich der in Laufrichtung (13) gesehen zweiten Transportrolle (11) eine exzentrisch gelagerte Rolle (4) angeordnet ist, deren Mantelfläche in Kontakt ist mit der Unterseite des Leitbleches (1).

4. Rollgang nach den Ansprüchen 1 bis 3,
dadurch gekennzeichnet,
daß der Grad der Schwenkbarkeit fixierbar (7) ist.

5. Rollgang nach den Ansprüchen 1 bis 4,
dadurch gekennzeichnet,
daß der Schwenkbereich ein Sattelelement (15,16) aufweist, das sich auf in Trägern (18,18') angeordneten Bolzen (17,17') abstützt.

6. Rollgang nach den Ansprüchen 1 bis 5,
dadurch gekennzeichnet,
daß der Abstand der Oberkante des vorderen Endes des Leitbleches (1) zur Oberkante der zweiten Transportrolle (11) etwa 1 mm beträgt.

7. Rollgang nach den Ansprüchen 1 bis 5.
dadurch gekennzeichnet,
daß im Ausgangszustand ohne Verstellung der exzentrisch gelagerten Rolle (4) das Leitblech (1) waagerecht liegt und diese Stellung durch zwei im Verstellbereich an der Unterseite des Leitbleches (1) befestigte Anschlagplatten (26,27) fixiert wird, die im Ausgangszustand auf der oberen Schmalseite der Träger (18,18') zur Anlage kommen.

## Claims

1. A roller table for transporting elongate bar-shaped stock, in particular hollow profiles of any desired cross-section, with transport rollers which are spaced apart at approximately equal distances, the axes of rotation of which lie at right-angles to the direction of travel of the stock, with a cover plate (1) being arranged in each case between two successive transport rollers (10, 11) beneath the path of movement, with a minimum width which corresponds to the width of the transport roller (10, 11),
characterized in that
the cover plate is in the form of a pivotable guide plate (1), the pivot axis (14) of which is located in the region of the first transport roller (10), viewed in the direction of travel (13), and in the pivoted-in state the guide plate (1), viewed in the direction of travel (13), has a rise, the front end of the guide plate (1) being located somewhat beneath the upper edge of the second transport roller (11), viewed in the direction of travel (13), and that upright continuous side plates (30, 30') are located in the end regions of the respective transport roller (10, 11).

2. A roller table according to Claim 1, characterized in that the pivotability of the guide plate (1) is continuously variable.

3. A roller table according to Claims 1 and 2, characterized in that an eccentrically mounted roller (4) is arranged in the region of the second transport roller (11), viewed in the direction of travel (13), the casing surface of which is in contact with the underside of the guide plate (1).

4. A roller table according to Claims 1 to 3, characterized in that the degree of pivotability can be fixed (7).

5. A roller table according to Claims 1 to 4, characterized in that the pivoting range has a saddle element (15, 16) which is supported on bolts (17, 17') arranged in supports (18, 18').

6. A roller table according to Claims 1 to 5, characterized in that the distance of the upper edge of the front end of the guide plate (1) from the upper edge of the second transport roller (11) is approximately 1 mm.

7. A roller table according to Claims 1 to 5, characterised in that in the initial state without adjustment of the eccentrically mounted roller (4) the guide plate (1) is horizontal and this position is fixed by two stop plates (26, 27) fastened in the adjustment region to the underside of the guide plate (1), which plates in the initial state come to bear on the upper narrow side of the supports (18, 18').

## Revendications

1. Train de rouleaux pour l'acheminement d'un produit long en forme de barre, notamment des profilés creux d'une section transversale quelconque, au moyen de rouleaux transporteurs présentant des écartements à peu près égaux entre eux, et dont les axes de rotation sont situés perpendiculairement au sens de défilement du produit, et dans lequel il est prévu, entre chaque fois deux rouleaux transporteurs (10, 11) successifs, une plaque de recouvrement (1), placée au-dessous du chemin de déplacement et ayant une largeur minimale, qui correspond à la largeur du rouleau transporteur (10, 11),
caractérisé en ce que
la plaque de recouvrement est réalisée sous la forme d'une plaque pivotante de guidage (1), dont l'axe de pivotement (14) se trouve dans la zone du premier rouleau transporteur (10), si l'on regarde dans le sens du déplacement (13), et la tôle de guidage (1) présente une montée, à l'état basculé, si l'on regarde dans le sens du déplacement (13), l'extrémité avant de la tôle de guidage (1) se trouvant légèrement au-dessous du bord supérieur du deuxième rouleau transporteur (11), si l'on regarde dans le sens du déplacement (13), et en ce que des tôles latérales continues (30, 30') sont placées de chant dans les zones d'extrémité du rouleau transporteur (10, 11) correspondant.

2. Train de rouleaux selon la revendication 1, caractérisé en ce que l'orientabilité de la tôle de guidage (1) est à réglage continu.

3. Train de rouleaux selon les revendications 1 et 2,
caractérisé en ce qu'un rouleau (4) monté de manière excentrée, et dont la surface d'enveloppe est en contact avec le dessous de la tôle de guidage (1), est placé dans la zone du deuxième rouleau transporteur (11) si l'on regarde dans le sens du déplacement (13).

4. Train de rouleaux selon les revendications 1 à 3, caractérisé en ce que le degré de l'orientabilité peut être maintenu (7).

5. Train de rouleaux selon les revendications 1 à 4,
caractérisé en ce que la zone de pivotement présente un élément en forme de selle (15, 16), qui prend appui sur des axes (17, 17') placés dans des supports (18, 18').

6. Train de rouleaux selon les revendications 1 à 5,
caractérisé en ce que la distance entre le bord supérieur de l'extrémité avant de la tôle de guidage (1) et le bord supérieur du deuxième rouleau transporteur (11) est d'à peu près 1 mm.

7. Train de rouleaux selon les revendications 1 à 5,
caractérisé en ce que, dans la position de départ, sans déplacement du rouleau (4) monté de manière excentrée, la tôle de guidage (1) est horizontale et en ce que cette position est maintenue au moyen de deux plaques de butée (26, 27), fixées contre le dessous de la plaque de guidage (1) dans la zone de réglage, et venant en appui, dans la position de départ, sur le chant supérieur des supports (18, 18').
